# EUROPEAN PATENT SPECIFICATION

(11) **EP 4 362 691 B1**
(45) Date of publication and mention of the grant of the patent: **09.09.2026**
(21) Application number: 22736281.1
(22) Date of filing: 30.06.2022
(51) Int. Cl.: A23J 3/14, A23J 3/26, A23P 30/20, B29C 48/00, B29C 48/30, B29C 48/325

(54) **MODULAR CONICAL SHORT DIE WITH MODIFIED GEOMETRY, AND METHOD AND USE THEREOF FOR PRODUCING MEAT AND FISH ANALOGUES**
MODULARE KONISCHE KURZFORMDÜSE MIT MODIFIZIERTER GEOMETRIE SOWIE VERFAHREN UND VERWENDUNG ZUR HERSTELLUNG VON FLEISCH- UND FISCHANALOGA
MATRICE COURTE MODULAIRE À GÉOMÉTRIE CONIQUE MODIFIÉE ET SON PROCÉDÉ ET UTILISATION POUR LA FABRICATION D'ANALOGUES DE VIANDE ET DE POISSON

(30) Priority: 30.06.2021 EP 21182990
(43) Date of publication of application: 08.05.2024
(73) Proprietor: Société des Produits Nestlé S.A., 1800 Vevey (CH)
(72) Inventor: BRETON, Olivier, 1046 Rueyres (CH); BUSOM DESCARREGA, Josep, 1030 Bussigny (CH); DE OLIVEIRA REIS, Guilherme, 1004 Lausanne (CH); HARSHE, Yogesh, 1006 Lausanne (CH); LIMA, Anthony, 25370 LES HÔPITAUX NEUFS (FR); PELLOUX, Cindy, 74500 Champanges (FR); PIBAROT, Patrick, 1820 Territet (CH)
(74) Representative: Dinger, Hansjörg
(86) International application number: PCT/EP2022/068199
(87) International publication number: WO 2023/275326

(56) References cited:
- WO-A1-2020/208104
- DE-A1- 102017 223 829
- US-A- 3 270 371
- US-A- 4 087 222
- US-A1- 2012 295 005
- US-A1- 2020 323 238

## Description

### BACKGROUND

The food market is regularly launching plant-based products to cater for vegetarian and vegan consumers demand and more recently for that of flexitarians.

Meat analogue products made using conventional dies, for example flat coat hanger dies, have the disadvantage that the geometry does not allow a perfect flow of the dough in the die, particularly when the protein transition results in an elastic solid phase. This transition above a critical temperature is necessary in order to achieve a meat look alike structure made with plant protein.

This problem is mainly due to the planar distribution in the die geometry because of edge effects and difficulty in achieving a proper flow of solid dough at each side of the planar channel. Walling effects are often seen in conventional flat coat hanger dies whereby the dough exits the die much faster in the middle of the planar channel compared with at the edges of the channel, particularly at higher flow rates.

There is a clear need to develop an improved apparatus and method of manufacturing a continuous slab of a plant protein in order to obtain symmetrical and homogeneous flow all along the die exit, particularly at higher flow rates.

### SUMMARY

When considering the structure and texture of meat, a striking feature is the complex hierarchical and multiscale structure of the muscular tissue, which is composed by protein fibrils of actin and myosin embedded in a collagen-based connective tissue. A key structural characteristic of the protein fibrils is that they may reach several centimeters in length and are responsible for chewiness of the meat.

When designing meat analogues to satisfy consumers, there is a need to integrate all the structural, textural and nutritional aspects of meat. For example, Kobe beef has a complex hierarchical and multiscale structured muscular tissue, inclusions of fat tissue within the protein matrix, and globular proteins distributed within the serum contained in the network structure.

The present disclosure provides advantages and solutions to problems in existing technologies for meat analogue extrusion devices and methods. A coat hanger die for making a meat analogue has been developed which is a significant improvement of the prior art. In particular, the present invention combines the advantages of increased throughput and reduced walling effect compared with flat 2-D type dies. Dies of this type are known from US 4 087 222 A which forms the basis for the preamble of claim 1.

The invention relates to a die for making a meat or fish analogue comprising vegetable protein, said die comprising an insert, a core comprising a cylindrical section and a conical end, and a flow path. Typically, the flow path has a topology defined by the insert and the core. Typically, the die comprises an expansion chamber. The die may comprise a succession of connected multiple expansion chambers. According to the invention, the die is a short die with an L/πD ratio less than or equal to 1, wherein L is the die flow path length and πD is the average exit perimeter length.

Typically, the die has a 3-dimensional coat hanger geometry.

In one embodiment, the die has an internal surface area to volume ratio from 0.1 to 1 mm⁻¹, preferably from 0.5 to 0.9mm⁻¹.

In one embodiment, at least two expansion chambers are located along the flow path. In one embodiment, one, two, or three expansion chambers are located along the cylindrical section.

In an embodiment, the core is moveable, preferably in a single vector, with respect to the insert. Preferably, the core is a conic core with a circular symmetry.

In an embodiment, the die is a short die. Preferably, the die is a coat-hanger type die.

In an embodiment, the die further comprises a frame connected to the insert and the core.

In an embodiment, the frame further comprises positioning means, for example a screw system. The positioning means positions the core inside the insert.

In an embodiment, the frame further comprises a guiding means, for example a screw thread, to facilitate the movement of the core inside the insert. Preferably, the movement of the core by the guiding means is in a single vector. In an embodiment, the core is not in contact with the insert. Typically, the core is moveable independently of the insert. Typically, there are no structures between the conic core and the insert, for example connecting bridges. These structures would disrupt the flow path of the dough as it passes through the die. In an embodiment, the insert and the core each further comprise a cooling means. Preferably, the cooling means of the insert is not connected to the cooling means of the core.

In an embodiment, the core comprises a summit end. Typically, the angle of the surface at a point between the cylindrical section of the core and the summit end of the core, for example at a point equidistant between the cylindrical section of the core and the summit end of the core is about 135°. Typically, the conic core has an apex angle of between 45° - 135°, preferably between 50°-75°. In an embodiment, the flow path has a cross-sectional area that (i) evolves according to the apex angle and cone length. In an embodiment, the flow path has a cross-sectional area that is kept constant along the flow path. In an embodiment, the flow path has a cross-sectional area that is adapted along the flow path by changing the conic core shape.

In an embodiment, the core is connected to rotational means, for example a motor, to facilitate rotation of the core. This has the advantage of creating additional rotational shear.

In an embodiment, the die comprises a die exit. Typically, the die exit is circular. Typically, the die exit is formed by the gap between the core and the insert.

The extrudate emerging from the die is particularly well suited to injection of gas, steam, coating, or fat. In an embodiment, the die further comprises one or more complementary rings situated adjacent to the die, preferably at the die exit. Preferably, a complementary ring injects gas, for example nitrogen gas, through a slit, for example a circular slit. Preferably, a complementary ring injects steam through a slit, for example a circular slit. Preferably, a complementary ring injects coating through a slit, for example a circular slit. Preferably, a complementary ring injects fat or fat analog through a slit, for example a circular slit. Preferably, the slit is connected to a pumping system. The invention further provides a method of making a meat analogue comprising a vegetable protein, the method comprising applying heat and/or pressure to a dough in an extruder; passing the dough through a die that is part of and/or is connected to the extruder, the die comprising an insert, a core, and a flow path; wherein the flow path is defined by the insert and the core, and wherein the dough passes through the flow path. Preferably, the die is according to the invention as described herein. The core comprises a cylindrical section and a conical summit end. Typically, the flow path has a topology defined by the insert and the core. Typically, the die comprises an expansion chamber and/or a succession of connected multiple expansion chambers.

According to the invention, the die is a short die. Preferably, the die is a coat hanger type die.

In an embodiment, gas or steam is injected into the die as the dough passes through the flow path.

In an embodiment, the dough is directed through the flow path at a mass flow rate of greater than 50 kg/h, greater than 75 kg/h, greater than 100 kg/h, or greater than 300 kg/h.

In an embodiment, the extruder operates at a screw speed of 50 to 400 rpm. Preferably, the extruder operates at a temperature of 140°C to 200°C. The dough can be prepared in a location selected from the group consisting of (i) a mixer from which the dough can be pumped into the extruder and (ii) the extruder, for example by separately feeding powder and liquid into the extruder. In an embodiment, the method further comprises adjusting the constant temperature of the insert and/or the conic core based on temperature information received from a temperature sensor that senses a temperature of the insert and/or the conic core as the dough passes through the flow path. The invention further relates to the use of a die as described herein to make a meat analogue comprising a vegetable protein. Preferably, the invention further relates to use of a die to make a meat analogue comprising a vegetable protein, wherein said die comprises a conic core with a circular symmetry.

### BRIEF DESCRIPTION OF THE FIGURES

FIG. 1 illustrates an isometric view of an embodiment of a die according to the present disclosure.
FIG. 2 illustrates a cutaway view of an embodiment of a die according to the present disclosure.
FIG. 3 illustrates a cutaway view of an embodiment of an insert and conic core according to the present disclosure.
FIG. 4 illustrates a cutaway view of an embodiment of a conic core according to the present disclosure.
FIG. 5 illustrates a cutaway view of an embodiment of a frame according to the present disclosure
FIG 6. illustrates a cutaway view of an alternative embodiment of an insert and conic core according to the present disclosure.
FIG. 7 illustrates a cutaway view of another alternative embodiment of an insert and conic core according to the present disclosure.
FIG. 8 illustrates a cutaway view of an alternative embodiment of a die according to the present disclosure.
FIG. 9 illustrates a cutaway view of the die showing complementary ring injection of fat analogue through inlets A and B.
FIG. 10 illustrates a cutaway view showing the length of cone, expansion chamber, slit exit inner diameter, slit exit outer diameter, length of slit exit, and length of cylinder.
FIG. 11 illustrates a cutaway view of the insert and conic core. Area is calculated along thick line. Dead volume for dough is also shown.
FIG. 12 illustrates a cutaway view of the insert and conic core. The dimensions of the embodiment are illustrated.
FIG. 13 illustrates Geometry 0 as described herein.
FIG. 14 illustrates Geometry 1 as described herein (no expansion chamber).
FIG. 15 illustrates Geometry 2 as described herein (no expansion chamber but reduced slit exit with longer slit length).
FIG. 16 illustrates Geometry 2b as described herein (no expansion chamber but reduced slit exit with shorter slit length).
FIG. 17 illustrates Geometry 3 as described herein (multiple expansion chambers, periodical and aligned).
FIG. 18 illustrates Geometry 4 as described herein (multiple expansion chambers, misaligned).
FIG. 19 illustrates Geometry 6 (multiple expansion chambers, periodical and aligned with larger exit slit gap (6mm)).
FIG. 20 illustrates Geometry 7 as described herein (Reference geometry with a shoulder).

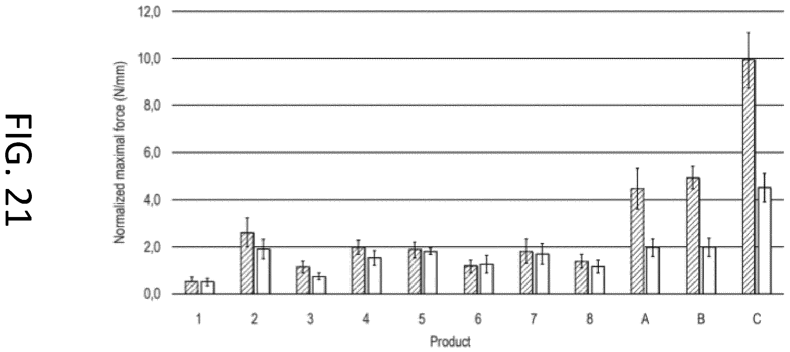

FIG. 21 illustrates a comparison of the maximum load forces values obtained in longitudinal and transversal directions for commercial products 1 to 8 and Nestlé products A, B, and C. Left hand bars = fibre direction 1; right hand bars = fibre direction 2.

### DETAILED DESCRIPTION OF EXAMPLE EMBODIMENTS

Detailed embodiments of devices and methods are disclosed herein. However, it is to be understood that the disclosed embodiments are merely exemplary of the devices and methods, which may be embodied in various forms. Therefore, specific functional details disclosed herein are not to be interpreted as limiting, but merely as a basis for the claims as a representative example for teaching one skilled in the art to variously employ the present disclosure. Features from product, method and use embodiments of the invention may be freely combined.

As used herein, the singular forms "a," "an" and "the" include plural referents unless the context clearly dictates otherwise. For example, reference to "an ingredient" or "a method" includes a plurality of such "ingredients" or "methods." The term "and/or" used in the context of "X and/or Y" should be interpreted as "X," or "Y," or "X and Y." Similarly, "at least one of X or Y" should be interpreted as "X," or "Y," or "both X and Y."

As used herein, "about," or "substantially" are understood to refer to numbers in a range of numerals, for example the range of -10% to +10% of the referenced number, preferably -5% to +5% of the referenced number, more preferably -1% to +1% of the referenced number, most preferably -0.1% to +0.1% of the referenced number. All numerical ranges herein should be understood to include all integers, whole or fractions, within the range. Moreover, these numerical ranges should be construed as providing support for a claim directed to any number or subset of numbers in that range. For example, a disclosure of from 20 to 300 should be construed as supporting a range of from 100 to 300, from 200 to 300, from 250 to 300, from 50 to 150, and so forth.

As used herein, "substantially perpendicular direction" should be taken to mean that may include sheared fiber orientations that are about +/- 15 degrees from a direction perpendicular to the direction of flow. In some embodiments, fibers that remain substantially perpendicular to the direction of flow may be bounded by smaller fibers at other angles relative to the direction of flow. However, even when considering the smaller fibers as included in the sheared fibers, an average angle of the sheared fibers with respect to the direction of flow may remain substantially perpendicular to the direction of flow. "Substantially equidistant from the inside of the insert" should be taken to mean that greater than 80%, more preferably 90%, most preferably all of the points on the core periphery at the widest diameter of the core are equidistant from the inside of the insert. All percentages expressed herein are by weight of the total weight of the meat analogue and/or the corresponding emulsion unless expressed otherwise.

The term "conic" refers to the shape of the core. Preferably, the core is a conic core with a circular symmetry. The core may be an alternative shape. Other forms such as an elliptical cone or a pyramidal cone with multiple edges, for example greater than six, or seven, or eight, or nine, or ten edges, are also possible.

The terms "food," "food product" and "food composition" mean a product or composition that is intended for ingestion by an animal, including a human or pet, and provides at least one nutrient to the animal.

A "meat analogue" is a meat emulsion product that resembles meat that has been derived from an animal source, in terms of appearance, texture, and physical structure. The meat derived from an animal source can be, for example, red meat, white meat, and fish. As used herein, a meat analogue does not include meat derived from an animal source; for example, a meat analogue that lacks meat derived from an animal source may instead use vegetable protein to achieve the appearance, texture, and physical structure of meat derived from an animal source.

A short die is defined as a die in which L/ΠD ratio is less than or equal to 1, wherein L is the die flow path length and ΠD is the average exit perimeter length. The length is defined as the length through which a material, for example a dough, travels when the die is in use and D is the average exit diameter.

In the present context, meat analogues may be plant protein-based food products, which can substitute pieces of meat by mimicking their structure, texture, and taste. A specific feature of meat analogues is the presence of a macroscopic fibrillar protein-based structure.

The preferred embodiments relate to devices and methods relating to meat analogue extrusion devices and methods and, more particularly, to meat analogue extrusion devices and methods for extruding meat analogues to create a fibrous macrostructure in the meat analogue with a die, preferably a conic die. The die of the invention creates meat analogues with fibres which are formed in the die in a substantially perpendicular direction to the flow path of the die. The die comprises an inlet and an outlet, or die exit. The die is preferably a short die, The die may include a line connection that directs a dough into a die inlet. The line connection may be connected to other elements of a meat analogue production system, for example an extrusion device, to receive raw and/or preprocessed meat analogue and/or dough for processing.

The die may be manufactured from a metal (i.e., aluminum, stainless steel), a plastic (i.e., Polyethylene Terephthalate, High-Density Polyethylene), an organic material (i.e., wood, bamboo), a composite (i.e., ceramic matric composite), and combinations thereof. The die may be manufactured through extrusion, machining, casting, 3D printing, and combinations thereof. The die may be coated with a material. For example, the die may be coated with a material to prevent bacterial and/or particulate buildup inside the die.

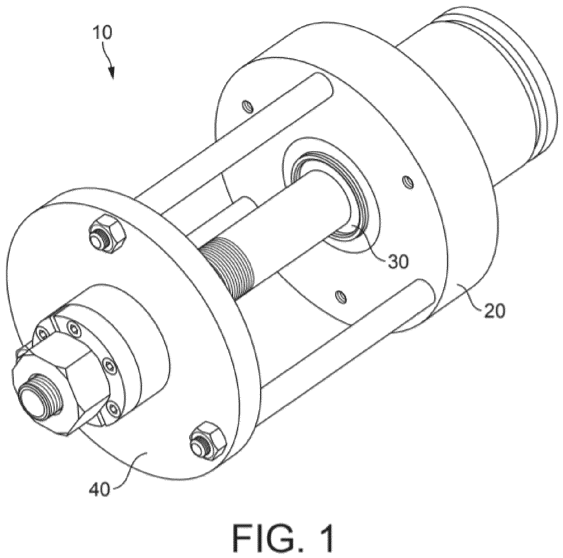

The die of the invention comprises an insert, also referred to as the main body, a core, preferably a conic core, and a flow path. Preferably, the die is a short die. Preferably, the die is of the coat hanger type. The coat hanger geometry is characterized by an expansion chamber situated right before the slit exit of the die. This specific geometry allows to create a succession of compression, decompression, compression and decompression to the atmospheric pressure which creates a specific fiber bundle. Preferably, the die comprises means to facilitate movement of the core inside the insert. Referring to FIG. 1, the die 10 comprises an insert or main body 20, and a conic core 30. Frame 40 is connected to the conic core 30 and the insert or main body 20 and facilitates movement of the conic core 30 inside the insert or main body 20. Frame 40 provides a concentric spatial relationship between the conic core 30 and the insert or main body 20.

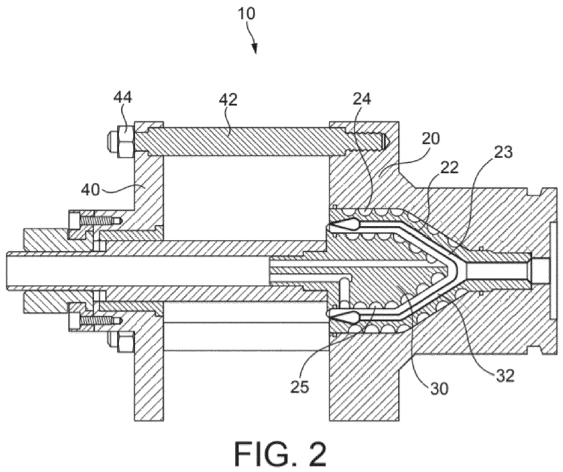

The flow path is the space between the insert or main body and the core. The insert and the core comprise a first interior surface and a second interior surface, respectively. In one embodiment, the first interior surface and/or the second interior surface is sanded. In one embodiment, the first interior surface and/or the second interior surface having a surface roughness rugosity value Ra of at least 3.2. The first interior surface and the second interior surface define the flow path. The insert and/or core comprise a cooling means. Referring to FIG. 2, the insert 20 and the core 30 include a first interior surface 22 and a second interior surface 32, respectively. The first interior surface 22 and the second interior surface 32 define a flow path 23. The flow path 23 represents the route of the dough as it is directed through the die 10.

Typically, the first interior surface and the second interior surface have a combined surface area of between 18000 mm² to 25000 mm², or about 19748 mm², or about 19777 mm², or about 20125 mm², or about 20304 m², or about 21352 mm², or about 21370 mm², or about 21399 mm².

Typically, the flow path has a volume of between 20000 mm² to 35000 mm², or about 23565 mm², or about 24149 mm², or about 24668 mm², or about 27005 mm², or about 29641 mm², or about 29784 mm², or about 29880 mm², or about 30594 mm².

The specific surface area is the ratio of surface area of the die in contact with the dough to the volume through which the dough flows. The specific surface area is a factor that would impact the relative ratio of shear and elongational stresses acting on the dough while it moves through the die. Thus, the orientation of the fibers and the stress experienced by the fibers is linked with the specific surface area. Typically, the specific surface area is between 0.58 to 0.99, or about 0.66, or about 0.68, or about 0.71, or about 0.73, or about 0.80, or about 0.88, or about 0.91.

The L/ΠD ratio defines the length divided by average exit perimeter (ΠD with D = (d1+d2)/2). The stresses are applied in the direction and perpendicular to the flow direction of the dough, respectively for L and ΠD. Typically, the L/ ΠD ratio is below 1, or about 0.45, or about 0.513, or about 0.53.

The insert 20 and/or the core 30 may comprise a cooling means 24, 25. The cooling means controls the temperature of the dough as it is directed through the die. The core may comprise a cooling means to control the temperature of the dough. The insert may comprise a cooling means to control the temperature of the dough. Referring to FIG. 2, the cooling means 25 of the core 30 may be controlled independently from the cooling means 24 of the insert 20. Preferably, the cooling means 25 of the core 30 and the cooling means 24 of the insert 20 are not physically connected, for example the coolant or cooling fluid used in the cooling means of the core 30 is not the same coolant or cooling fluid used in the cooling means of the insert 20.

The frame may be connected to the insert by connecting means, for example axes or rods. A positioning means, for example a screw system, may be used to position the core inside the insert. Referring to FIG. 2, the die 10 includes a frame 40. The frame 40 may be connected to the insert 20 by axes 42. The frame 40 provides a concentric spatial relationship between the core 30 and the insert 20. The frame 40 may include a screw system 44. The screw system facilitates movement of the core 30 inside the insert 20. The movement may be parallel to a z geometrical axis of the insert 20. The core 30 and the insert 20 may be fixed at any suitable position to form a flow path 23 between the core 30 and the insert 20.

The gap between the core and the insert forms the die exit. Typically, the die exit is circular. Typically, the die exit has a defined gap size (or exit slit gap). The gap size is the difference between the die exit outer diameter and the die exit inner diameter.

Typically the die exit outer diameter is between 45 mm to 55 mm. For example, the die exit outer diameter is between 47.5 mm to 49.5 mm, or about 48.5 mm. For example, the die exit outer diameter is between 49 mm to 51 mm, or about or 50 mm. For example, the die exit outer diameter is between 51 mm to 53 mm, or about 52 mm.

Typically, the die exit inner diameter is between 41 mm to 50 mm. For example, the die exit inner diameter is between 43 mm to 45 mm, or about 44 mm. For example, the die exit inner diameter is between 43.5 mm to 45.5 mm, or about 44.5 mm. For example, the die exit inner diameter is between 46 mm to 48 mm, or about 47 mm.

Typically, the die exit has a gap size of between 1 mm to 5.5 mm, or between 1 mm to 5 mm, or between 1.4 to 3.5 mm. In one embodiment, the gap size may be between 1.4 to 1.6 mm. In one embodiment, the gap size may be about 1.5 mm. In one embodiment, the gap size may be between 2.4 to 2.6 mm. In one embodiment, the gap size may be about 2.5 mm. In one embodiment, the gap size may be between 2.9 to 3.1 mm. In one embodiment, the gap size may be about 3 mm. In one embodiment, the gap size may be between 3.4 to 3.6 mm. In one embodiment, the gap size may be about 3.5 mm. In one embodiment, the gap size may be between 4.7 to 4.9 mm. In one embodiment, the gap size may be about 4.8 mm.

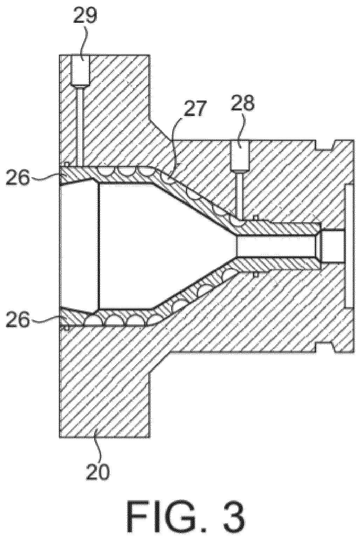

Typically, the exit slit length is between 5 mm to 30 mm. For example, the exit slit length is between 10 mm to 12 mm, or about 11.15 mm. For example, the exit slit length is between 20.7 to 22.7 mm, or about 21.7 mm. For example, the exit slit length is between 13.5 mm to 16 mm, or about 14.73 mm. For example, the exit slit length is between 23.5 mm to 26 mm, or about 24.73 mm. Typically, the die exit has an external perimeter of greater than 400 mm, preferably between 400 mm and 500 mm, for example 450 mm. The core and insert have a concentric spatial relationship. A double helical mantle may be screwed inside the insert. The cooling means may be regulated by a temperature sensor (not shown). Referring to FIG. 3, a gap between the conic core and the insert forms the die exit 26. A double helical mantle 27 may be screwed inside the insert 20. The double helical mantle 27 may have an inlet connection 28 and an outlet connection 29 to a cooling means.

Typically, the core comprises a cylindrical section and a cone. The cylindrical section has a defined cylindrical length. The cone can also be called the summit end.

Typically, an expansion chamber is situated between the slit exit and the summit end. The expansion chamber has a radius R2 and R2.7 as illustrated herein. For example, the R2.7 radius can be between 25° to 35°, or about 29.36°. Typically, the cylindrical length is between 15 mm to 45 mm, or about 17.89 mm, or about 18 mm, or about 24.65 mm, or about 28.55 mm, or about 34.65 mm, or about 42.5 mm.

Typically, the cone or summit end is rounded. Typically, the cone length is between 20 mm to 45 mm, or between 25 mm to 30 mm, or about 27 mm, or between 34 mm to 39 mm, or about 36 mm.

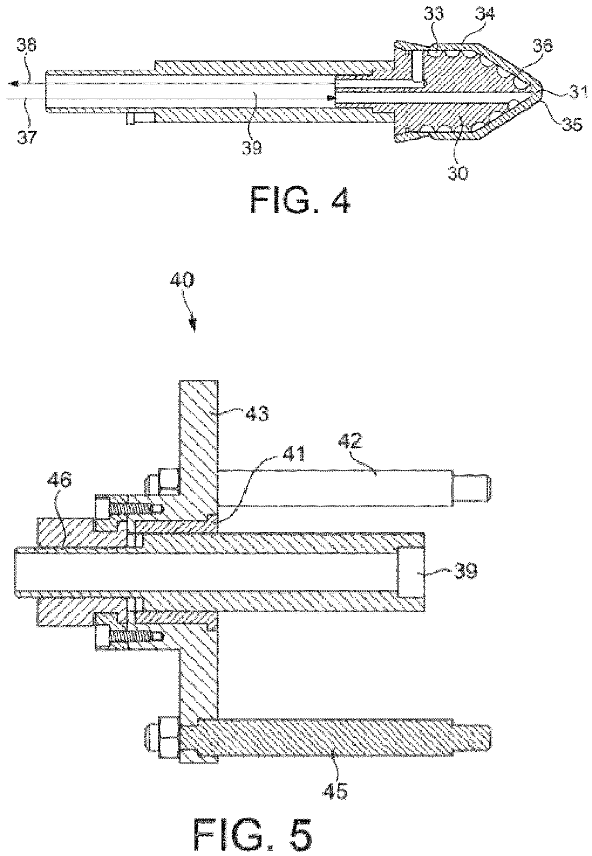

The summit end may comprise a helical channel on its surface. A mantle may be adapted to plug on the summit end. This may create a cooling circuit inside the core. The core may be connected to the frame by a central axis. Referring to FIG. 4, the conic core 30 comprises a summit end 31. The summit end 31 is rounded. Typically, the summit end has a cone apex radius R6 as illustrated herein. The summit end 31 has a helical channel 33 on its surface 34. A conic mantle 35 is adapted to plug on the summit end 31 to create a cooling circuit 36 inside the conic core 30 with an inlet connection 37 and an outlet connection 38 to the external cooling. The conic core 30 is connected to the frame by a central axis 39, thereby allowing coolant or cooling fluid to be fed to the conic core cooling circuit 36.

The frame further comprises guiding means, for example a screw thread. This facilitates the accurate positioning of the core inside the insert. The frame and the insert can also be maintained in a fixed position without modification. It also further enables the flow path to be adjusted. Referring to FIG. 5, the frame 40 is composed of a bearing guide 41 inside a flange 43 connected to the insert by three screwed rods 45 with an adapted geometry to set the bearing guide 41 centered to the insert. A central axis 39 may be connected on one side to the conic core and on the other side to the bearing guide 41 with fine thread 46 to allow an accurate positioning of the conic core inside the insert and further enables the flow path to be adjusted.

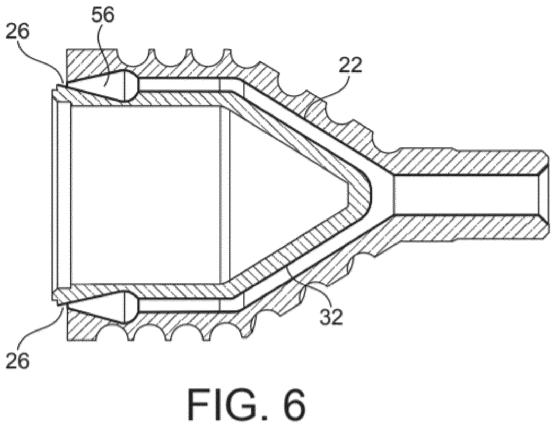

In an embodiment, the die imposes periodic pressure variation on the dough. The conic core can be modified for specific meat analogue applications or to create specific fibrous structures. The first interior surface and the second interior surface may each comprise a helicoidal channel. The first interior surface and the second interior surface may each comprise periodical grooves. Referring to FIG. 6, the first interior surface 22 and the second interior surface 32 comprise a helicoidal channel 56 to orientate the dough shape in a curved direction. This enables mimicking of a fish meat analogue structure. In other applications, the first interior surface 22 and the second interior surface 32 may comprise periodical grooves. These can induce dough flow disturbance to create specific fibrous structures.

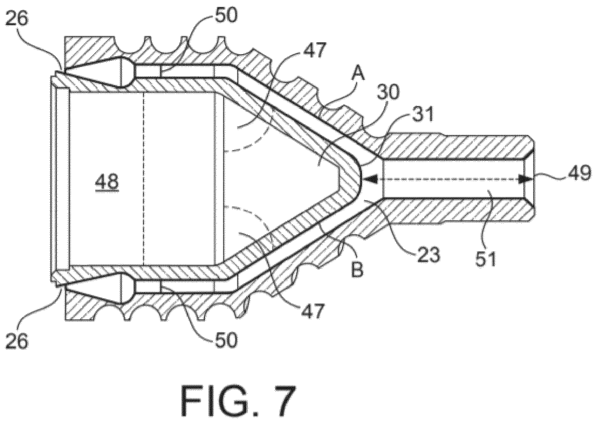

In an embodiment, the core comprises a cylindrical section and a summit end. The angle of the surface between the cylindrical section of the core and the summit end of the core can be varied, for example the angle of the surface at a point equidistant between the cylindrical section of the core and the summit end of the core can be varied. The angle of the surface between the cylindrical section of the core and the summit end of the core, for example the angle of the surface at a point equidistant between the cylindrical section of the core and the summit end of the core, can be between 100° to 170°, or between 110° to 160°, or between 120° to 150°, or between 130° to 140°, or about 135°. Where the angle is 135° or less, the angle of the surface between the cylindrical section of the core and the summit end of the core, for example the angle of the surface at a point equidistant between the cylindrical section of the core and the summit end of the core, can be between 100° to 135°, or between 105° to 130°, or between 110° to 125°, or between 115° to 120°, or about 117°. Where the angle is 135° or more, the angle of the surface between the cylindrical section of the core and the summit end of the core can be between 135° to 170°, or between 140° to 165°, or between 145° to 160°, or between 150° to 155°, or about 152°. As shown in FIG. 7, the angle 47 of the surface between the cylindrical section of the conic core and the summit end 31 of the conic core 30 can be increased or decreased, thereby adjusting the pressure gradient in the flow path 23. If angle 47 is decreased, for example to equal or less than 135°, the flow path of the dough will widen at the summit end 31 of the conic core 30 and then the dough will increase in pressure as the flow path 23 is reduced. In another embodiment, if angle 47 is increased, for example to equal or greater than 135°, the flow path of the dough will narrow at the summit end 31 of the conic core 30 and then the flow of the dough will widen as the flow path 23 is increased. The diameter 48 of the conic core 30 or the distance 51 from the summit end 31 of the conic core 30 to the die entrance 49 is also adjusted when angle 47 is modified to adjust the gap 50 in the cylindrical section of the conic core 30. By adjusting the values of angle 47, diameter 48, and distance 51, the structure and texture of the resulting product at the die exit 26 can be altered. For example, the expansion, density, and fiber organization can be altered.

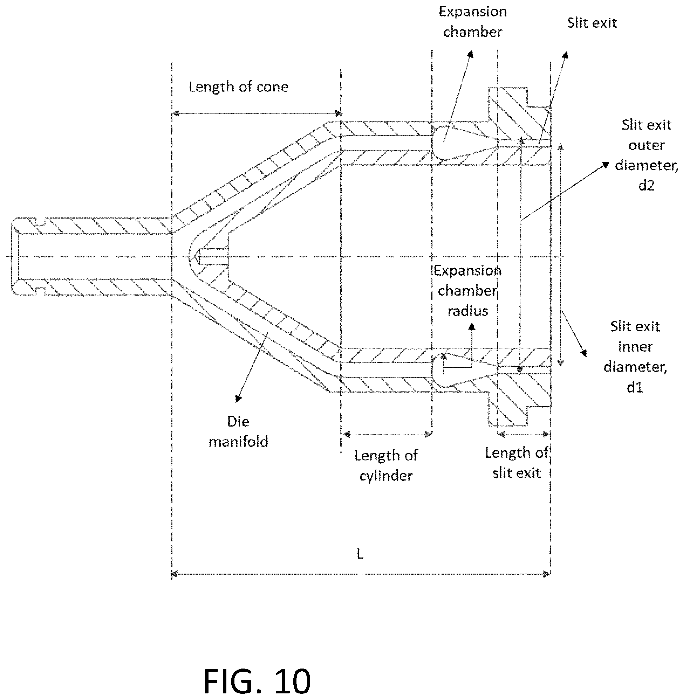

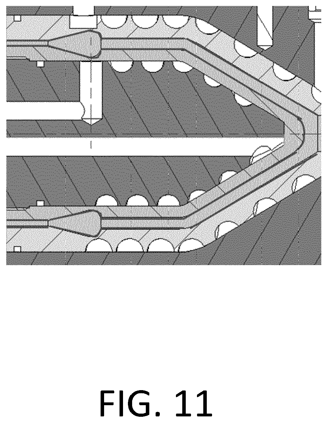

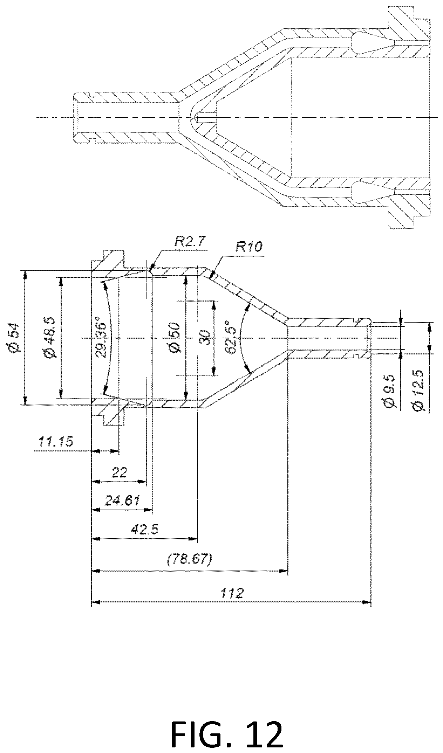

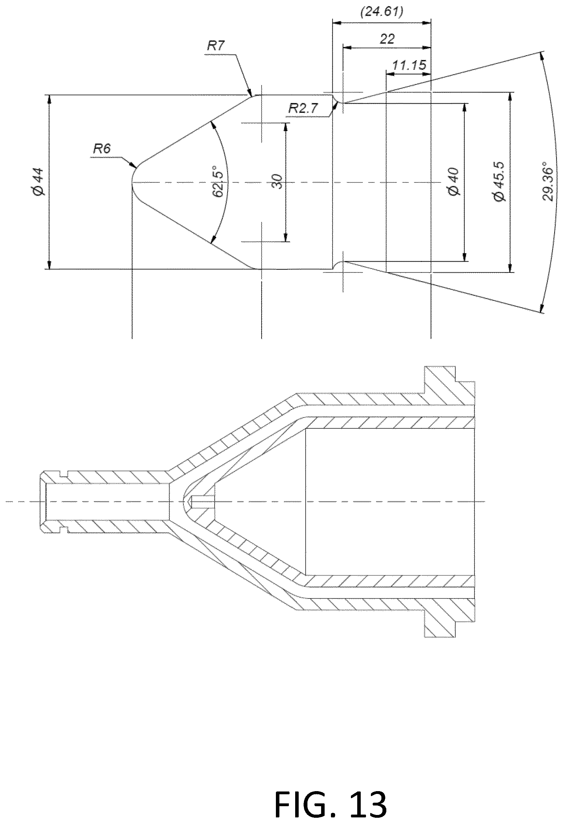

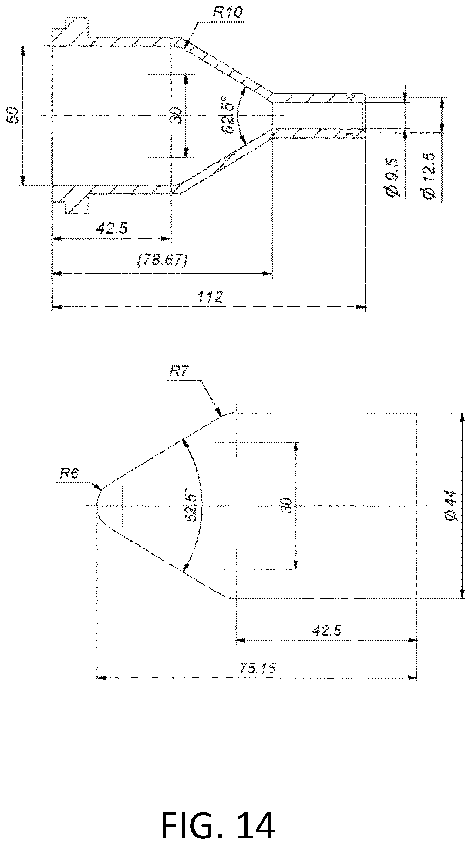

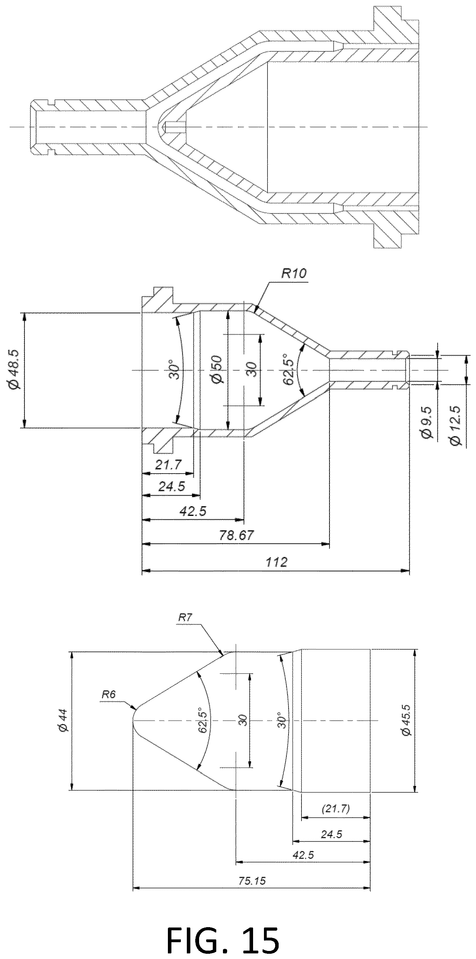

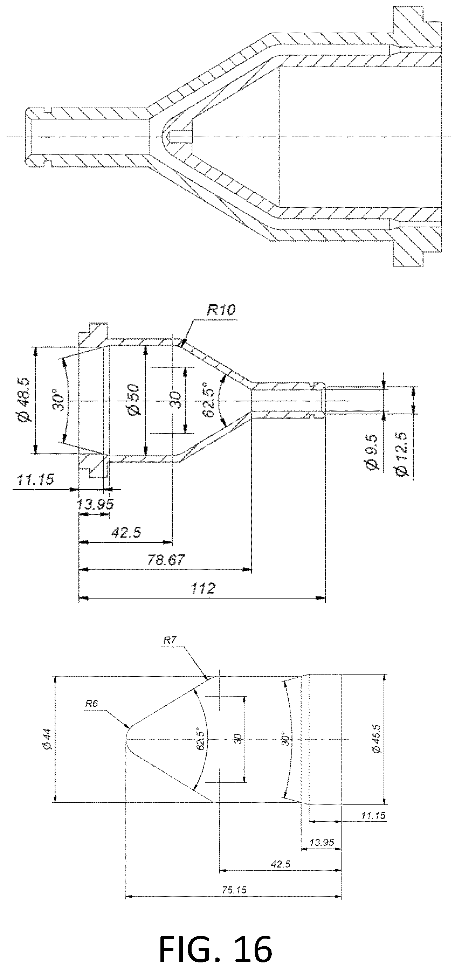

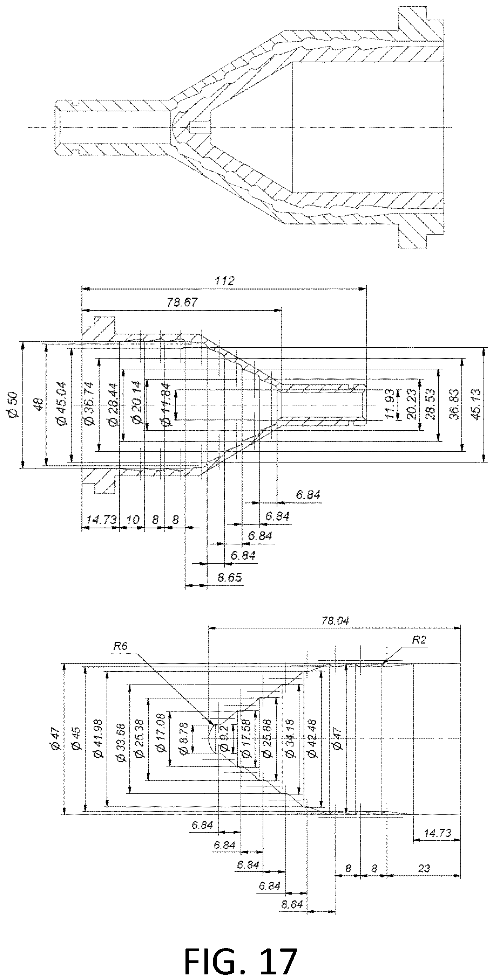

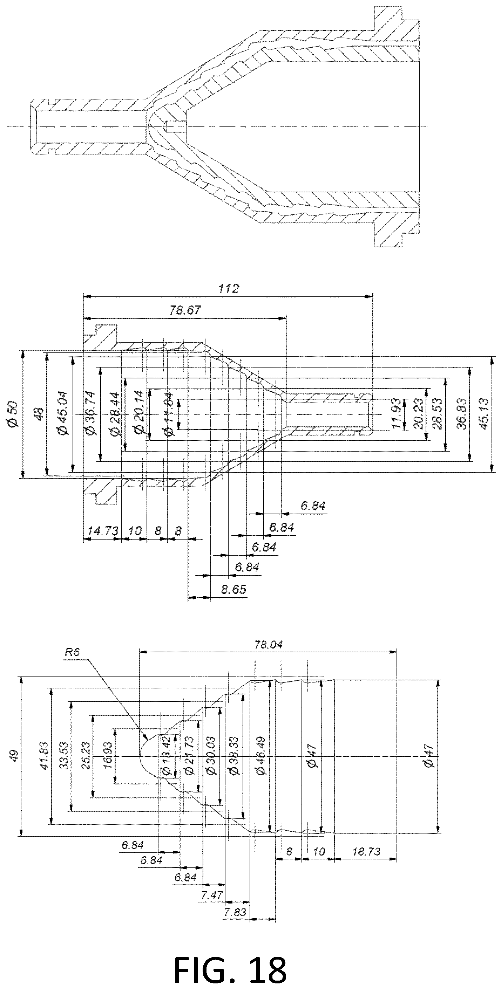

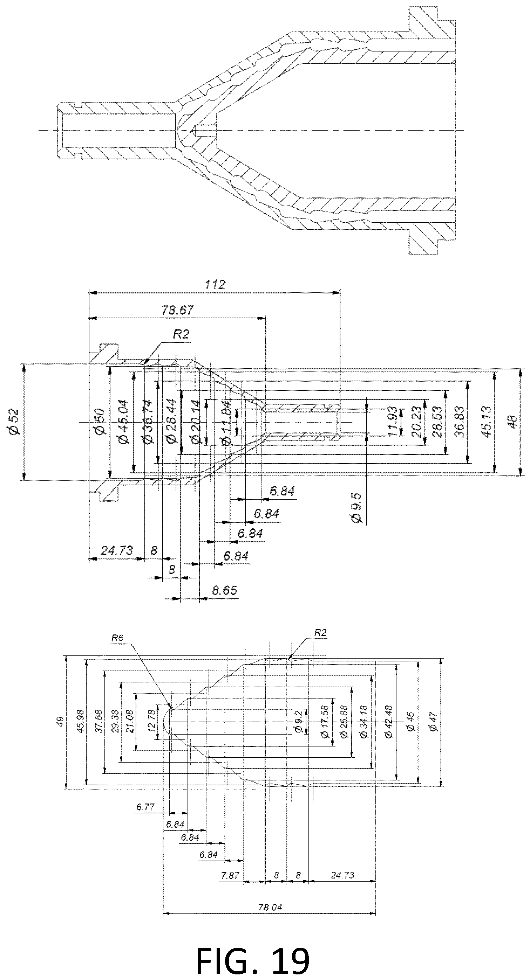

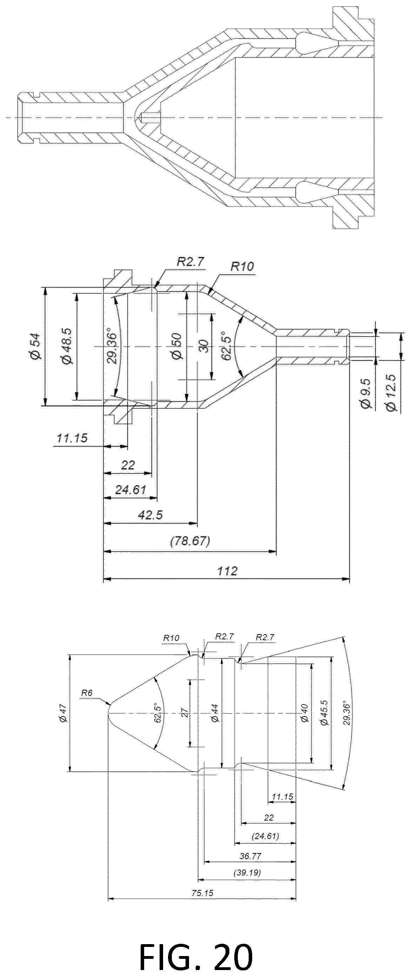

In an embodiment, the die is substantially similar in its dimensions to those described or illustrated herein, for example to any one of those illustrated in FIGs. 10 to 20.

The conic die of the invention may be in the form of at least one of the following embodiments.

In one embodiment, the conic die comprises a) a cylindrical section; b) a coat hanger geometry, the coat hanger geometry may be characterized by having an expansion chamber proximal to a circular slit exit; c) the circular slit exit may have a gap size of about 1.5mm; and d) the expansion chamber may be in the form of a ring or annulus zone.

In one embodiment, the conic die comprises a) cylindrical geometry made up of a conic entrance and a cylindrical section; b) cylindrical geometry is characterized by no expansion chamber, no restriction, continuous gap size, for example 3 mm, from the entrance until the exit of the die.

In one embodiment, the conic die comprises a) cylindrical geometry with a slit exit, for example a long slit exit, comprising a conic entrance followed by a cylindrical section; b) the cylindrical geometry is characterized by no expansion chamber and but with a restriction having a circular slit, for example a long circular slit, at the exit, for example 1.5mm slit.

In one embodiment, the conic die comprises a) cylindrical geometry with a slit exit, for example a shorter slit exit, comprising a conic entrance followed a cylindrical section; b) the cylindrical geometry is characterized by no expansion chamber and but with a restriction having a short circular slit at the exit, for example a 1.5mm slit.

In one embodiment, the conic die comprises a) multiple restrictions on its internal surfaces b) a conic entrance c) a cylindrical section having multiple and successive narrowing and expansion chambers d) a circular slit exit, for example a 1.5 mm slit exit.

In one embodiment, the conic die comprises a) multiple misaligned restrictions on its internal surfaces b) a conic entrance c) a cylindrical section having multiple misaligned and successive narrowing and expansion chambers d) a circular slit exit, for example a 1.5 mm slit exit. The consequence of the multiple misaligned restrictions is increase in the path length between the conic entrance and the exit of the die.

In one embodiment, the conic die comprises a) multiple restrictions on its internal surface b) a conic entrance c) a cylindrical section having multiple and successive narrowing and expansion chambers d) a circular slit exit, for example a 3.5 mm slit exit.

In one embodiment, the conic die comprises a) a conic entrance b) a cylindrical section c) the coat hanger geometry is characterized by an expansion chamber (ring or annulus zone), a the circular slit exit (1.5mm) and a shoulder after the conical part.

In one embodiment, one or more internal surface is sanded, wherein the sanded surface has a rugosity value Ra of at least 3.2. In one embodiment, the friction force is increased. In one embodiment, the one or more internal surface comprises restrictions, for example misaligned restrictions.

In an embodiment, the die comprises one or more expansion chambers, for example, 1, 2, 3, 4, 5, 6, 7, 8, 9, 10, or more expansion chambers.

In an embodiment, the expansion chambers are aligned. In one embodiment, the expansion chambers are periodical. In one embodiment, the expansion chambers are aligned and periodical. In an embodiment, the expansion chambers are not aligned. In an embodiment, at least one interior surface comprises a shoulder, for example a shoulder on the conic core. In an embodiment, the surface geometry of at least one internal surface of the die creates pressure variation without compression and decompression within the die. In one embodiment, the first and /or second interior surface comprise multiple small-scale variations of amplitude in the height of their surface, thereby disrupting the flow path.

In an embodiment, the core is connected to a motor to facilitate rotation of the core. This creates additional rotating shear to create an altered extrudate structure. In another embodiment, the core does not freely rotate.

In an embodiment, the die comprises gas or steam injecting means.

In an embodiment, the die further comprises one or more complementary rings situated adjacent to the die, preferably at the die exit. Preferably, a complementary ring injects gas, for example nitrogen gas, through a slit, for example a circular slit. Preferably, a complementary ring injects steam through a slit, for example a circular slit. Preferably, a complementary ring injects coating through a slit, for example a circular slit. In one embodiment, a complementary ring injects fat or fat analog by means of a circular slit connected to a fat pumping system. In one embodiment, a complementary ring injects ingredients, for example flavor and/or color solutions. If extrusion dies, for example conic dies, are vertically stacked, then multi-structure products can be manufactured.

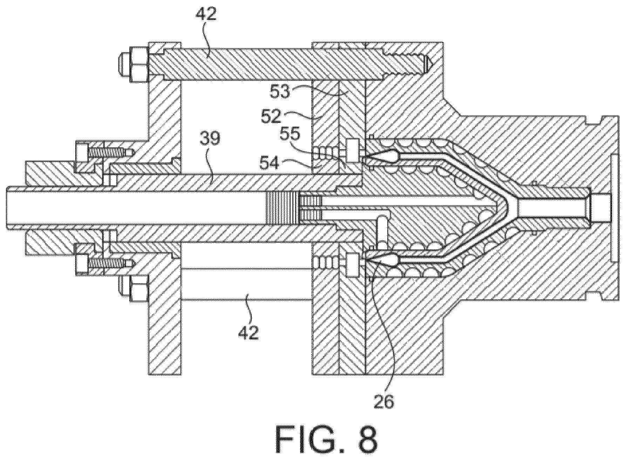

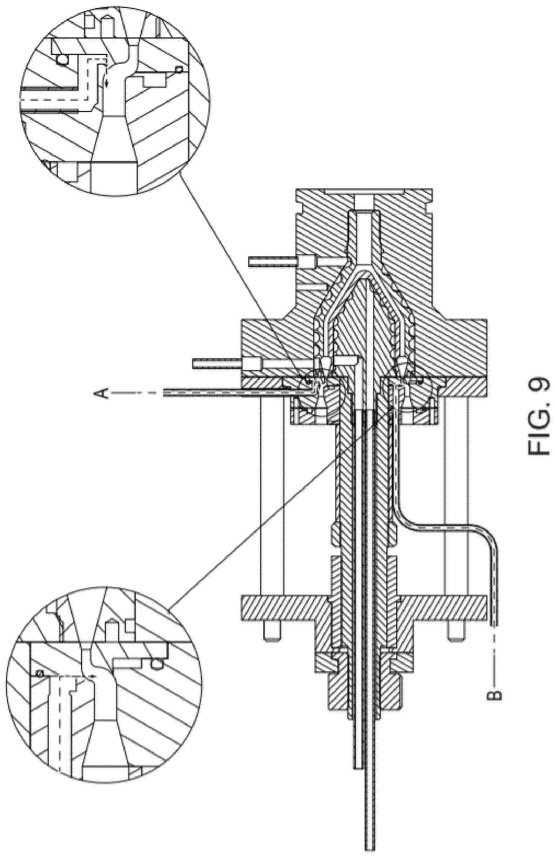

Each complementary ring can add a post-extrusion process step. The process step sequence can be in a different order from herein described depending on the targeted product structure and properties. Referring to FIG. 8, one or more complementary rings 52 to 55 are situated adjacent to the die exit 26. Internal rings 54 and 55 are attached to the central axis 39. External rings 52 and 53 are maintained in position by three external axes 42. Referring to FIG. 9, fat analogue may be injected via inlets A and B using complementary rings situated adjacent to the die exit.

In one embodiment, a heat treatment is applied outside the die, for example to obtain jellification of fat emulgel, or to sterilize the meat analogue extrudate. The heat treatment can be provided by water or steam circulation, for example in a double jacket ring. In one embodiment, a complementary ring applies steam on the surface of the meat analogue extrudate. In one embodiment, a complementary ring applies a jellifying composition to create a bilayer structure on the external surface of the meat analogue extrudate. The gelling of the solution can be induced by an additional ring to heat the external layer and to provoke external layer reticulation. The bi-layered structure can be cut in one direction to obtain a bi-structure slab.

In one embodiment, a cutting means cuts the meat analogue extrudate as it exits the die at one point to obtain a single piece of extrudate. In one embodiment, the cutting means cuts the meat analogue extrudate as it exits the die at more than one point to obtain more than one piece of extrudate. In one embodiment, a cutting means cuts the meat analogue extrudate perpendicularly to the flowing direction with a moving blade to obtain a spring shape. In one embodiment, a cutting means cuts the meat analogue extrudate in both directions to obtain chunks of defined sizes (granulator).

The die may comprise an insert; a core; and a flow path; wherein the flow path is defined by the insert and the core and wherein the insert and the core comprise a first interior surface and a second interior surface, respectively, and wherein the first interior surface and/or the second interior surface comprise multiple small-scale variations of amplitude in the height of their surface, thereby disrupting the flow path. In one embodiment, the the first interior surface and/or the second interior surface has a surface roughness rugosity value Ra of at least 3.2. In one embodiment, the die comprises an expansion chamber. In one embodiment, the core is a conic core with a circular symmetry. In one embodiment, the die is a short die. In one embodiment, the core comprises a cylindrical section and a summit end, wherein the angle of the surface at a point equidistant between the cylindrical section of the core and the summit end of the core is about 135°. In one embodiment, the die comprises a die exit, wherein the die exit is circular and formed by the gap between the core and the insert. In one embodiment, the die further comprises one or more complementary rings situated adjacent to the die. In one embodiment, a complementary ring injects fat or fat analog through a circular slit.

The invention further provides a method of making a meat analogue comprising a vegetable protein, the method comprising applying heat and/or pressure to a dough in an extruder; passing the dough through a die that is part of and/or is connected to the extruder, the die comprising an insert, a core, preferably a conic core, and a flow path; wherein the flow path is defined by the insert and the core. Preferably, the die is according to the invention as described herein. Preferably, the die is a short die of the coat hanger type.

Preferably, the extruder operates at a screw speed of 50 to 400 rpm. The extruder may operate at a mass flow of greater than 20 kg/h, or greater than 75 kg/h, or greater than 100 kg/h, or greater than 200 kg/h, or greater than 300 kg/h, or greater than 1000 kg/h, or up to 5000 kg/h, or up to 100000 kg/h. Preferably, the extruder operates at a temperature of 140°C to 200°C. The dough can be prepared in a location selected from the group consisting of (i) a mixer from which the dough can be pumped into the extruder and (ii) the extruder, for example by separately feeding powder and liquid into the extruder. In an embodiment, the method further comprises maintaining the insert and/or the conic core at a constant temperature.

In an embodiment, the method further comprises adjusting the constant temperature of the insert and/or the conic core based on temperature information received from a temperature sensor that senses a temperature of the insert and/or the conic core as the dough passes through the flow path.

In an embodiment, the method comprises injecting gas or steam into the die as the dough passes through the flow path. Preferably, the gas is nitrogen gas.

In an embodiment, the dough is directed through the flow path at a mass flow rate of 20 kg/h to 300 kg/h, preferably 75 kg/h to 300 kg/h.

In an embodiment, the meat analogue comprises fibres which are formed in a substantially perpendicular direction to the flow path of the die. In an embodiment, the values of the ratio of the maximum force to cut the fibres in transversal direction to the maximum force to cut the fibres in longitudinal direction with respect to the direction of the flow path of the die is about 2, more preferably 2 or greater.

In an embodiment, the method further comprising cutting the meat analogue after the meat analogue exits the die.

The invention further relates to the use of a core, preferably a conic core with a circular symmetry, in a die as described herein to make a meat analogue comprising a vegetable protein.

The invention further relates to the use of a die as described herein to make a meat analogue comprising a vegetable protein. Preferably, the invention relates to the use of a die to make a meat analogue comprising a vegetable protein, wherein said die comprises a conic core with a circular symmetry.

The meat analogue extrusion system may first preprocess the dough at a dough preparation area. For example, the dough may include multiple ingredients, and the multiple ingredients may require mixing prior to further processing. The mixing may be performed by hand and/or may be performed by a mechanical mixer, for example a blender.

The dough may be placed in a pump, for example a piston pump, of the meat analogue extrusion system. The dough may be placed in the pump by hand, and/or may be automatically transported from the dough preparation area to the pump. The pump may transmit the dough through a line. The line may be connected to an extruder. For example, the line may be connected to a twin screw extruder. In an embodiment of the meat analogue extrusion system, the line is not included, and the pump is connected directly to the extruder.

The extruder, for example a twin screw extruder, may apply a pressure to the dough to move the dough from a side of the extruder with the pump to an opposite side of the extruder. The extruder may additionally or alternatively apply heat to the dough. The extruder may additionally or alternatively be configured with an injection port to inject water and/or another material into the dough as the dough moves though the extruder.

The steps included herein have been given in an order, but the steps disclosed herein are not limited to being performed in the order presented herein. For example, a cooling step may occur before or after passing the dough through the die.

The dough and/or meat analogue may include a raw material. In a preferred embodiment, the raw material is a non-animal substance. Non-limiting examples of suitable non-animal protein substances include pea protein, wheat gluten such as vital wheat gluten, corn protein, for example ground corn or corn gluten, soy protein, for example soybean meal, soy concentrate, or soy isolate, rice protein, for example ground rice or rice gluten, cottonseed, peanut meal, whole eggs, egg albumin, milk proteins, and mixtures thereof. Preferably, the non-meat protein substances are pea protein, wheat gluten, and/or soy protein, and mixtures thereof.

In some embodiments, the raw material does not comprise a meat and comprises gluten, for example wheat gluten. In some embodiments, the raw material does not comprise a meat and does not comprise any gluten.

The raw material may optionally comprise a flour. If flour is used, the raw material may include protein. Therefore, an ingredient may be used that is both a vegetable protein and a flour. Non-limiting examples of a suitable flour are a starch flour, such as cereal flours, including flours from rice, wheat, corn, barley, and sorghum; root vegetable flours, including flours from potato, cassava, sweet potato, arrowroot, yam, and taro; and other flours, including sago, banana, plantain, and breadfruit flours. A further non-limiting example of a suitable flour is a legume flour, including flours from beans such as favas, lentils, mung beans, peas, chickpeas, and soybeans.

In some embodiments, the raw material may comprise a fat such as a vegetable fat. A vegetable oil, such as corn oil, sunflower oil, safflower oil, rape seed oil, soy bean oil, olive oil and other oils rich in monounsaturated and polyunsaturated fatty acids, may be used additionally or alternatively.

The raw material may include other components in addition to proteins and flours, for example one or more of a vitamin, a mineral, a preservative, a colorant and a palatant.

### EXAMPLES

### Example 1

### Difference in performance levels of a classical coat hanger die and the conic coat hanger die

A classic coat hanger die was connected to two twin-screw extruders in two separate trials, one set of trials with a Buhler extruder and another with a Clextral extruder.

The two trials were conducted with the same dough formula as described in the following table:

| **Ingredients** | **% wb** |
|---|---|
| Pea protein isolate 1 | 12.21 |
| Pea protein isolate 2 | 12.21 |
| Vital wheat gluten | 10.59 |
| Water | 54.76 |
| TVP pea | 7.94 |
| Flavor/seasoning/vitamin | 2.29 |

The temperature of the extruder barrels were increased up to a transition temperature at which the protein blend of the extrudate became a fibrous elastic material to mimic the meat structure and texture.

The dough was prepared in a mixer by mixing the powder blend in water for obtaining a moisture at 54 - 56 % wb. The dough was pumped in the extruder at a given mass flow output.

The flow output was increased progressively and the flow behavior of the solid elastic extrudate at the exit of the die was observed in order to determine at which flow output value the flow becomes uneven. This flow output value indicated the maximum capacity of the die to process a meat lookalike extrudate material.

The results from the two trials were the same. The maximum flow output for having an even flow in the die was below 20 kg/h and was around 18 kg/h. When the flow output was increased to a value above 20 kg/h, the solid fibrous extrudate flow became uneven because of wall effects of the classical coat hanger die. The flow at each edge of the die became very low and resulted in a complete blockage at the edge of the die with a preferential narrow pathway in the central part of the die.

The same recipe than the one for the classic coat hanger die was used for trials with a Clextral extruder and the conic coat hanger short die of the invention. The same experimental protocol was used. Flow output of the solid fibrous extrudate was increased up to a value for which an even flow was observed (above 50 kg/h and upwards of 150 kg/h) without any observation of a flow distribution problem around the circular slit). The flow was even all along the circular slit at all tested flow output.

The flow output was raised up to 76 kg/h without reaching the limit of the conic die.

In conclusion, the 3-dimensional design and axis symmetry allowed the conic coat hanger to obtain an even flow which may even have been above 100 kg/h (for the tested die) while the 2-dimension of the classic coat hanger die was limited to a value below 20 kg/h.

The tested conic die had an external slit perimeter of 15 cm while the tested classic coat hanger die was upscaled from a slit length of 15 cm to a slit length of 45 cm. Conic dies with an external slit perimeter of 45 cm had an even flow of 300 kg/h.

### Example 2

### Comparison of commercial and conic coat hanger die extrudates

Commercially available meat analogues were compared with meat analogues of the same product type prepared from extrudate manufactured with the conical coat hanger short die (CCHSD). Texture analyses with TAXT+ equipment and sensory analyses with a panel were performed.

For commercial product selection, a search of the Mintel database was conducted for competitor vegan or vegetarian products on sale in Europe since 2017. The products were purchased and kept frozen prior to sensory analysis and texture analysis.

Meat analogues were prepared using wet extrusion and CCHSD. Texture analyses were performed with a TAXT.plus equipment from Stable Micro Systems Ltd, Godalming, United Kingdom. A probe with 1 knife cut through the samples. Standard blades from HDP/KS10 with 1.5 mm beveling at 45° and a 50kg load cell were used. The measurement parameters were: test speed: 1 mm/s, distance: 30 mm, trigger force : 0.100N.

A total of 10 samples per variant were analyzed, each having a 4x8cm dimension. Two cutting directions were used for each sample (1- cutting across fibres (transversal) and 2- cutting along fibres (longitudinal)). This allowed to measure whether the fibers were aligned in a preferred direction as seen in a real meat structure. Maximal load force was recorded for each measurement. The average and standard deviation calculated for each sample. The analyzed products were of varying thickness and so the maximum load forces values were normalized by the thickness value, i.e. the maximum load forces values were divided by measured thickness.

The comparison of the maximum load forces values obtained in longitudinal and transversal directions are shown in Figure 10 for commercial products 1 to 8 and Nestlé products A, B, and C, all of which are the same product type. Commercial meat analogue products displayed a lower normalized maximal force as compared to Nestlé products manufactured with CCHSD, particularly for cutting direction 1 which corresponds to the transversal to the fiber alignment direction in the case of the Nestlé CCHSD samples. The differences between the two direction values is also significantly higher for the product manufactured with CCHSD. These differences can be indicated by the values of the ratio of the maximum force in transversal direction / maximum force in longitudinal direction (ratio D1/D2). The ratio D1/D2 is around 1 for commercial products 1 to 8 indicating no particular fiber orientation and thus no similarity with meat structure. Nestlé products A, B, and C had a ratio of D1/D2 values above 2, indicating a significant fiber orientation which mimics meat structure. For sensory analysis, an in-house panel consisting of 9 Nestlé employees was recruited to conduct the RATA (Rate All That Apply) methodology on eleven meat analogue products (including commercial samples and Nestlé prototypes). Two training sessions were conducted. During the training sessions, the panelists were introduced to the texture attributes in the ballot (Table 1) and trained using reference samples.

For the RATA procedure, the panelists were asked to tick the sensory descriptors they perceived for describing the individual meat analogue and then to rate the intensity of the given attribute using five-point category scale ("slightly", "moderately", "much", "very much", "extremely"). However, if they did not perceive the sensory attribute, they were instructed to skip the attribute, thus leaving the intensity box empty. Fresh water was used for palate cleansing.

In order to determine which samples were significantly different from each other and on which attribute(s), a two-way ANOVA was applied. The sample was fixed and the panelist was a random factor. The data was treated as continuous data. A non-selected attribute was treated equivalent to "not perceived" and assigned as intensity = 0. ANOVA indicated significant differences between vegan meat analogues evaluated in the present study, and so Fisher's Least Significant Difference (LSD) was then calculated to determine the significance of the difference between any pair of samples. A 95% confidence level was applied to these statistical tests.

The attributes which were contributing the most to differentiating the samples was determined. The range/LSD is an index enabling to rank the attributes according to their discriminating power within a given sample set, the range being the difference between the largest and smallest sensory scores given by the panel for the whole sample set and for a given attribute. The higher the Range/LSD index for a given attribute, the more discriminant the attribute was for a given sample subset. In the context of the present study, the sensory scores for the texture attributes showing the highest Range/LSD index (> 3) are detailed.

| **Attribute name** | **Definition** | - | + |
|---|---|---|---|
| Initial firmness | Resistance when chewing between molars for the first chew | Soft | Very Firm |
| Firm | Overall resistance when chewing between molars for the overall evaluation | Soft | Very Firm |
| Compact | Dense and heavy texture resulting from a lack of the air in the product. Opposite: Aerated | Aerated | Dense |
| Chewy | Number of chews until the product is ready for swallowing | Melting | Chewy |
| Rubbery | Recovery of food (particle) shape after repeated compression between the molars | | Springy/ Elastic |
| Fibrous | Amount of long fibers perceived during consumption | Not (Dough) | |

### Example 3

### Effect of die geometry

The effect of different die geometries were tested. Die geometries 0, 1, 2, 2b, 3, 4, 6, and 7 were manufactured having the dimensions of various features as shown in the table below.

| **Geometry name** | **Exit slit outer diameter, mm** | **Exit slit inner diameter** | **Exit slit gap mm** | **Exit slit length mm** | **Surface area mm²** | **Volume mm²** | **Specific surface area, 1/mm** | **L/πD** |
|---|---|---|---|---|---|---|---|---|
| 0 | 48.5 | 45.5 | 1.5 | 11.15 | 20125 | 30594 | 0.66 | 0.532 |
| 1 | 50 | 44 | 3 | NA | 19748 | 29784 | 0.66 | 0.532 |
| 2 | 48.5 | 45.5 | 1.5 | 21.7 | 19777 | 24668 | 0.80 | 0.457 |
| 2b | 48.5 | 45.5 | 1.5 | 11.15 | 19777 | 27005 | 0.73 | 0.532 |
| 3 | 50 | 47 | 1.5 | 14.73 | 21370 | 24149 | 0.88 | 0.516 |
| | | | | | | | | |
| 4 | 50 | 47 | 1.5 | 14.73 | 21399 | 23565 | 0.91 | 0.516 |
| 6 | 52 | 45 | 3.5 | 24.73 | 21352 | 29880 | 0.71 | 0.516 |
| 7 | 48.5 | 45.5 | 1.5 | 11.15 | 20304 | 29641 | 0.68 | 0.532 |

The cylindrical length and cone length of each die geometry is shown in the table below.

| **Geometry name** | **Description** | **Cylindrical length, mm** | **Cone length, mm** |
|---|---|---|---|
| 0 | Reference conic die | 17.89 | 36.17 |
| 1 | No expansion chamber | 42.5 | 36.17 |
| 2 | No expansion chamber with reduced expansion zone but narrow gap and longer slit exit length | 18 | 36.17 |
| 2b | No expansion chamber with reduced expansion zone but narrow gap and shorter slit exit length | 28.55 | 36.17 |
| 3 | Multiple expansion chambers, aligned and periodical | 34.65 | 27.36 |
| 4 | Multiple expansion chambers, misaligned | 34.65 | 27.36 |
| 6 | multiple expansion chambers, periodical and aligned with larger exit slit gap | 24.65 | 27.36 |
| 7 | Reference geometry with a shoulder | 17.89 | 36.17 |

A short description and comment on each geometry is provided in the table below

| **Geometry name** | **Description** | **Comment** |
|---|---|---|
| 0 | The reference conic coat hanger geometry is made up of a conic entrance followed a cylindrical section and the coat hanger geometry is characterized by an expansion chamber (ring or annulus zone) just before the circular slit exit (1.5mm) | This particular geometry with pressure variations profile along the length of the die associates with shear rate and protein relaxation create specific flow instability at the exit of the die resulting in a specific fiber structure and texture |
| 1 | The cylindrical geometry is made up of a conic entrance followed a cylindrical section and is characterized by no expansion chamber and no restriction but a continuous gap size (3 mm) right from the entrance until the exit of the die | This geometry results gradual pressure variation without compression and decompression cycles within the die. No flow instabilities and fiber disorientation occur. The geometry results in larger fiber bundles with more gap / voids between the bundles. |
| 2 | The cylindrical geometry with a longer slit exit is made up of a conic entrance followed a cylindrical section and it is characterized by no expansion chamber and but with a restriction having a long circular slit at the exit (1.5mm) | The long circular slit exit resulted in large pressure drop before the exit of the die and the die was blocked. |
| 2b | The cylindrical geometry with a shorter slit exit is made up of a conic entrance followed a cylindrical section and it is characterized by no expansion chamber and but with a restriction having a short circular slit at the exit (1.5mm) | This geometry results compression just before the exit of the die due to the circular slit. The flow orientation and fiber bundles are modified as compared to the reference geometry due the absence of the expansion chamber. The geometry results more discontinuous structure and with larger gaps fiber bundles. |
| 3 | The multiple restriction (8) geometry is made up of a conic entrance followed a cylindrical section having multiple and successive narrowing and expansion chambers with a circular narrow (1.5mm) slit exit | This geometry results in successive disorientations of fibers with reduction of flow instability at the die exit. This results in more dense fiber bundles' thickness. |
| 4 | The multiple misaligned restriction (8) geometry is made up of a conic entrance followed a cylindrical section having multiple misaligned and successive narrowing and expansion chambers with a circular narrow (1.5mm) slit exit. The consequence of the multiple misaligned restrictions is increase in the path length between the conic entrance and the exit of the die | This geometry results more orientation of the fiber bundle in the direction of the flow because of increase in the overall pathlength inside the die. |
| 6 | The multiple restriction (8) geometry is made up of a conic entrance followed a cylindrical section having multiple and successive narrowing and expansion chambers with a circular wider (3.5mm) slit exit | This geometry results in successive disorientations of fibers with reduction of flow instability at the die exit. This results in more dense fiber bundles' thickness with more disruptions between the fiber bundles. |
| 7 | The modified reference conic coat hanger geometry is made up of a conic entrance followed a cylindrical section and the coat hanger geometry is characterized by an expansion chamber (ring or annulus zone) just before the circular slit exit(1.5mm) and a shoulder just after the conical part | This particular geometry with pressure variations profile along the length of the die associates with shear rate and protein relaxation create specific flow instability at the exit of the die resulting in a specific fiber structure and texture. The shoulder creates additional disorientation of fibers resulting in lot more disruptions between the fiber bundles. |

The following recipe was used for each test die geometry:

| Pea recipe | |
|---|---|
| Wheat gluten | 12.5% |
| Pea protein isolate | 26.5% |
| Insoluble particles | 2.0% |
| Flavours | 2.0% |
| Vinegar (10% acetic acid) | 4.0% |
| Water | 53.0% |

### Example 4

### Sample microscopy

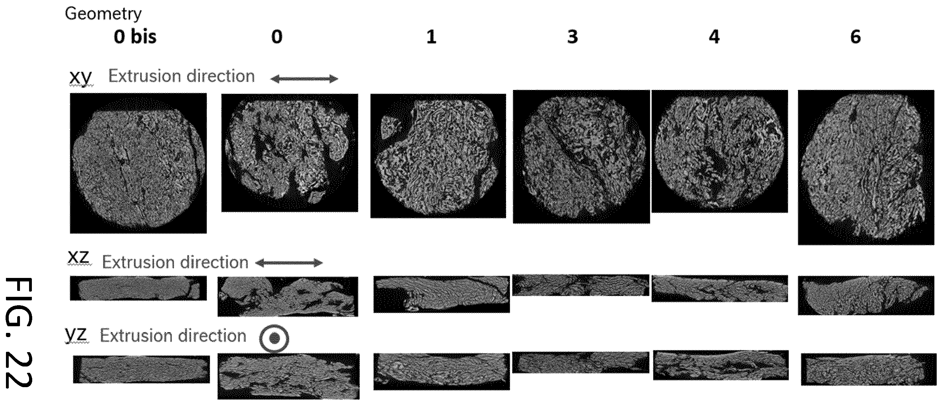

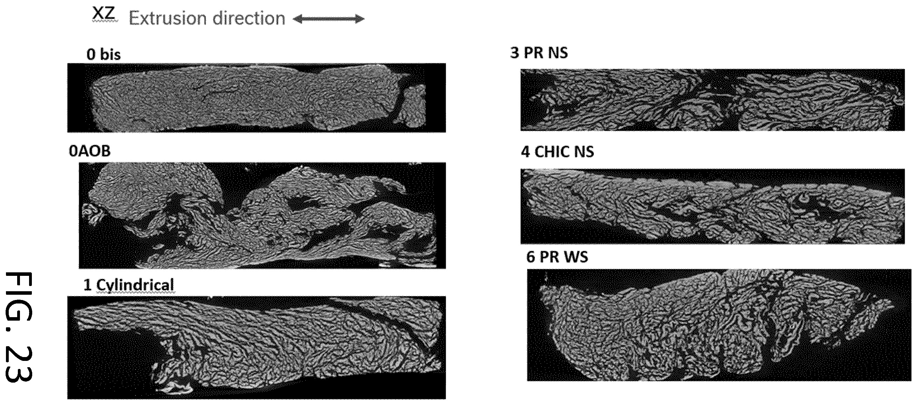

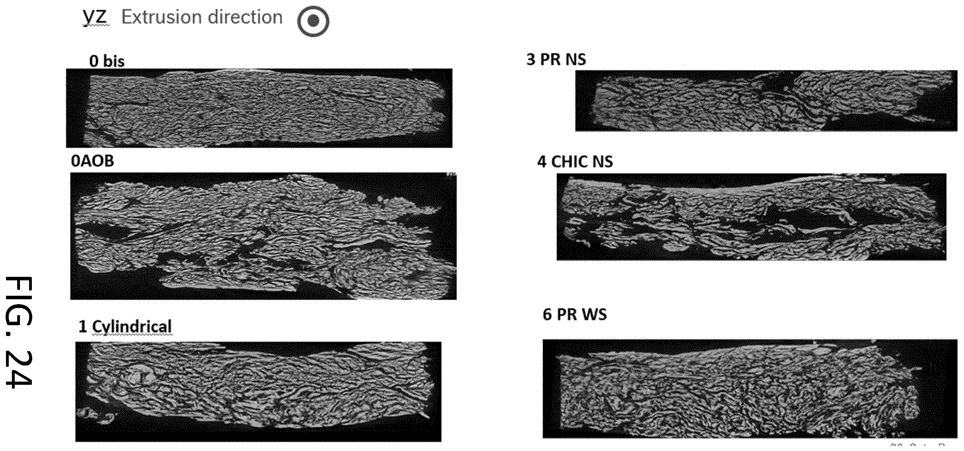

Sample specimens were extracted from extrudates. Specimen dimensions were 18 mm diameter and 3 to 4 mm in height. Specimens were taken from a point of midway between the extrudate edge and its symmetry axis. Sample imaging was performed by X-ray tomography using a µCT 35 from Scanco. The acquisition parameters were as follows: X-ray voltage, 55 kV; Voxel size, 10 µm. The estimate probed volume was the entire specimen. Resulting X-Ray tomographs are shown in figs 22 to 24.

### Feature thickness distribution

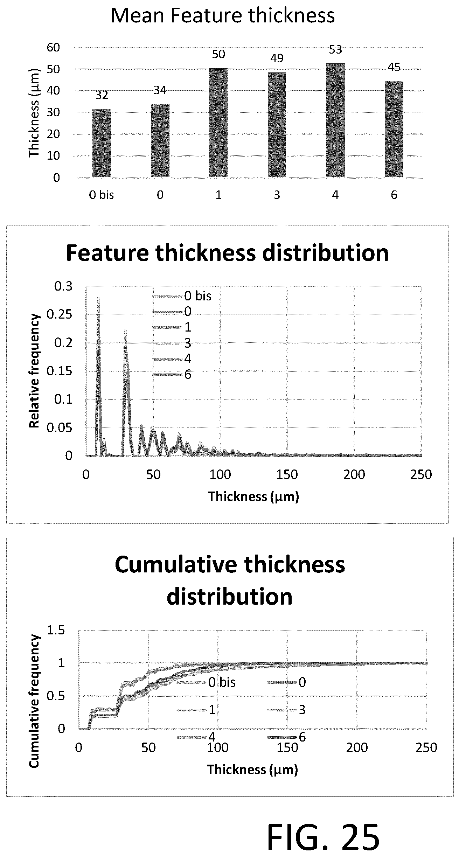

Feature thickness was calculated in 3D. The smallest dimension of each feature independently of the direction. The feature thickness was calculated in the entire tomography volume (see Fig. 25)

| | | | | | | |
|---|---|---|---|---|---|---|
| Geometry | 0 bis | 0 | 1 | 3 | 4 | 6 |
| Mean fiber thickness (µm) | 32 | 34 | 50 | 49 | 53 | 45 |

### Average feature number and feature thickness in cross-section

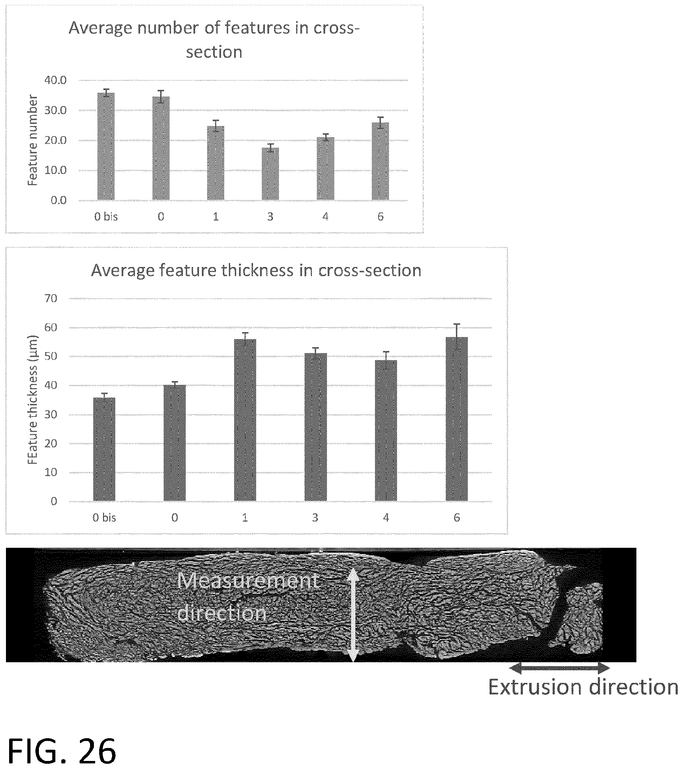

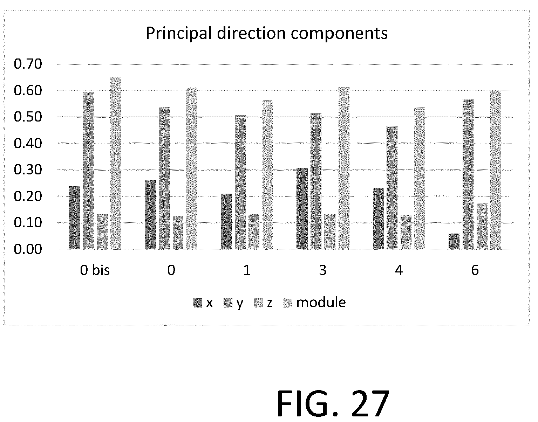

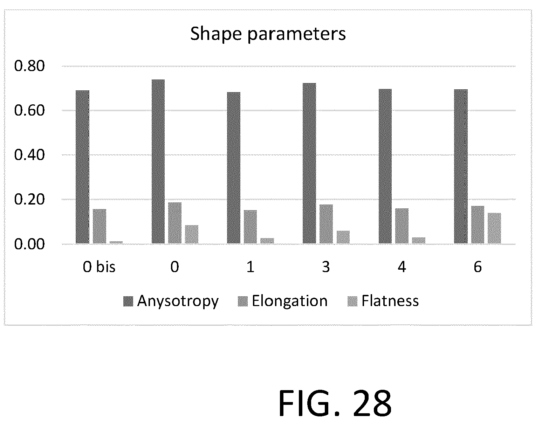

The feature thickness and number were calculated across the specimen section, from 1d lines in 1000-3000 locations (see fig. 26).

| Average features in cross-section | | | | | | |
|---|---|---|---|---|---|---|
| | Prior1a | Prior 6 a | Prior 4a | Prior 2a | Prior 3a | Prior 5a |
| Geometry | 0 bis | 0 | 1 | 3 | 4 | 6 |
| 1 | 37.1 | 33.8 | 22.2 | 17.3 | 22.2 | 25.6 |
| 2 | 36.3 | 32.6 | 26.6 | 19.2 | 21.2 | 28.3 |
| 3 | 34.2 | 37.3 | 25.5 | 16.0 | 19.6 | 23.9 |
| Mean | **35.8** | **34.6** | **24.8** | **17.5** | **21.0** | **25.9** |
| St. Dev | 1.2 | 2.0 | 1.9 | 1.3 | 1.1 | 1.8 |

| Average feature thickness | | | | | | |
|---|---|---|---|---|---|---|
| 1 | 34 | 39 | 59 | 49 | 51 | 52 |
| 2 | 36 | 40 | 53 | 51 | 44 | 55 |
| 3 | 37 | 42 | 55 | 53 | 51 | 63 |
| Mean | **36** | **40** | **56** | **51** | **49** | **57** |
| St. Dev | 2 | 1 | 2 | 2 | 3 | 4 |

### Orientation parameters

For Eigenvalue component (x or y or z), 0 = all features randomly oriented respect to this axis; 1 = all features preferentially oriented towards this axis. For Eigenvalue module, 0 = all features randomly oriented; 1 = all features showing preferential orientation.

| Geometry | 0 bis | 0 | 1 | 3 | 4 | 6 |
|---|---|---|---|---|---|---|
| Eigenvalue x | 0.24 | 0.26 | 0.21 | 0.31 | 0.23 | 0.06 |
| Eigenvalue y | 0.59 | 0.54 | 0.51 | 0.51 | 0.47 | 0.57 |
| Eigenvalue z | 0.13 | 0.12 | 0.13 | 0.13 | 0.13 | 0.18 |
| Eigenvalue module | 0.65 | 0.61 | 0.56 | 0.61 | 0.54 | 0.60 |

### Shape parameters

| Geometry | 0 bis | 0 | 1 | 3 | 4 | 6 |
|---|---|---|---|---|---|---|
| Anisotropy | 0.69 | 0.74 | 0.68 | 0.72 | 0.70 | 0.69 |
| Elongation | 0.16 | 0.19 | 0.15 | 0.18 | 0.16 | 0.17 |
| Flatness | 0.01 | 0.09 | 0.03 | 0.06 | 0.03 | 0.14 |

Further explanation with regard to the above values are shown below.

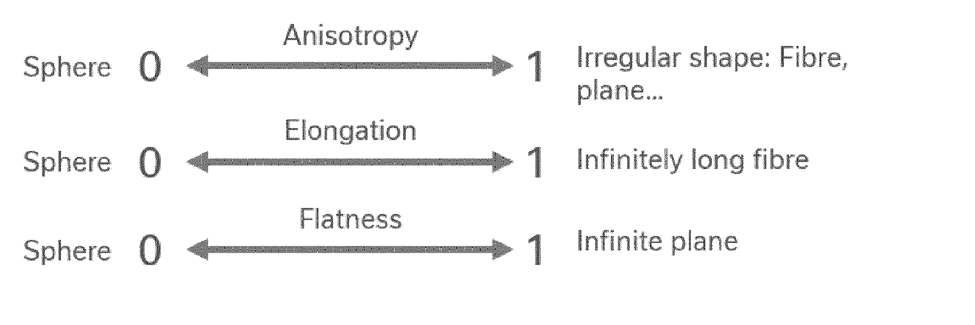

## Claims

1. A die (10) for making a meat or fish analogue comprising vegetable protein, said die comprising:
an insert (20);
a core (30) comprising a cylindrical section and a conical summit end (31); and
a flow path (23);
wherein the flow path (23) has a topology defined by the insert (20) and the core (30) and
wherein the die (10) comprises an expansion chamber and/or a succession of connected multiple expansion chambers,
**characterized in that**
the die (10) is a short die with an L/πD ratio less than or equal to 1, wherein L is the die flow path length and πD is the average exit perimeter length.

2. The die according to claim 1, wherein the die has an internal surface area to volume ratio from 0.1 to 1 mm⁻¹, preferably from 0.5 to 0.9mm⁻¹.

3. The die according to any of claims 1 or 2, wherein at least two expansion chambers are located along the flow path.

4. The die according to any of claims 1 to 3, wherein one, two, or three expansion chambers are located along the cylindrical section.

5. The die according to any of claims 1 to 4, wherein the core is a conic core located inside the insert, and wherein there are no connecting bridges between the conic core and the insert.

6. The die according to any of claims 1 to 5, wherein the conic core has an apex angle of between 45° - 135°, preferably between 50°-75°.

7. The die according to any of claims 1 to 6, wherein the die comprises a die exit, wherein the die exit is circular and formed by the gap between the core and the insert.

8. The die according to any of claims 1 to 7, further comprising one or more complementary rings situated adjacent to the die.

9. The die according to claim 8, wherein a complementary ring injects fat or fat analog through a circular slit.

10. A method of making a meat or fish analogue comprising a vegetable protein, the method comprising:
applying heat and/or pressure to a dough in an extruder;
passing the dough through a die that is part of and/or is connected to the extruder, the die comprising:
an insert;
a core comprising a cylindrical section and a conical summit end; and
a flow path;
wherein the flow path has a topology defined by the insert and the core and wherein the die comprises an expansion chamber and/or a succession of connected multiple expansion chambers.

11. The method of claim 10, wherein the die is a short die of the coat hanger type.

12. The method according to any of claims 10 or 11, wherein gas or steam is injected into the die as the dough passes through the flow path.

13. The method according to any of claims 11 to 12, wherein the dough is directed through the flow path at a mass flow rate of greater than 50 kg/h.

14. The method according to any of claims 11 to 13, wherein the meat or fish analogue comprises fibres which are formed in a substantially perpendicular direction to the flow path of the die.

15. Use of a die as described in claims 1 to 9 to make a meat or fish analogue comprising a vegetable protein, wherein said die comprises a conic core with a circular symmetry.

## Patentansprüche

1. Formwerkzeug (10) zum Herstellung eines Fleisch- oder Fischanalogons, umfassend pflanzliches Protein, das Formwerkzeug umfassend:
einen Einsatz (20);
einen Kern (30), umfassend einen zylindrischen Abschnitt und ein konisches Spitzenende (31); und
einen Strömungsweg (23);
wobei der Strömungsweg (23) eine Topologie, die durch den Einsatz (20) und den Kern (30) definiert ist, aufweist und
wobei das Formwerkzeug (10) eine Expansionskammer und/oder eine Abfolge von verbundenen, vielfachen Expansionskammern umfasst,
**dadurch gekennzeichnet, dass**
das Formwerkzeug (10) ein kurzes Formwerkzeug mit einem L/πD-Verhältnis kleiner als oder gleich 1, ist, wobei L die Strömungsweglänge des Formwerkzeugs ist und πD die durchschnittliche Austrittsumfangslänge ist.

2. Formwerkzeug nach Anspruch 1, wobei das Formwerkzeug ein Verhältnis von innerem Oberflächeninhalt zu Volumen von 0,1 bis 1 mm⁻¹, vorzugsweise von 0,5 bis 0,9 mm⁻¹, aufweist.

3. Formwerkzeug nach einem der Ansprüche 1 oder 2, wobei sich mindestens zwei Expansionskammern entlang des Strömungswegs befinden.

4. Formwerkzeug nach einem der Ansprüche 1 bis 3, wobei sich eine, zwei oder drei Expansionskammern entlang des zylindrischen Abschnitts befinden.

5. Formwerkzeug nach einem der Ansprüche 1 bis 4, wobei der Kern ein konischer Kern ist, der sich im Inneren des Einsatzes befindet, und wobei es keine Verbindungsbrücken zwischen dem konischen Kern und dem Einsatz gibt.

6. Formwerkzeug nach einem der Ansprüche 1 bis 5, wobei der konische Kern einen Scheitelwinkel zwischen 45°-135°, vorzugsweise zwischen 50°-75°, aufweist.

7. Formwerkzeug nach einem der Ansprüche 1 bis 6, wobei das Formwerkzeug einen Formwerkzeugaustritt umfasst, wobei der Formwerkzeugaustritt kreisförmig ist und durch den Spalt zwischen dem Kern und dem Einsatz ausgebildet ist.

8. Formwerkzeug nach einem der Ansprüche 1 bis 7, ferner umfassend einen oder mehrere komplementäre Ringe, die angrenzend an das Formwerkzeug angeordnet sind.

9. Formwerkzeug nach Anspruch 8, wobei ein komplementärer Ring Fett oder Fettanalogon durch einen kreisförmigen Schlitz einspritzt.

10. Verfahren zum Herstellen eines Fleisch- oder Fischanalogons, umfassend ein pflanzliches Protein, das Verfahren umfassend:
Anwenden von Wärme und/oder Druck auf einen Teig in einem Extruder;
Führen des Teigs durch ein Formwerkzeug, das Teil des Extruders ist und/oder mit diesem verbunden ist, Formwerkzeug umfassend:
einen Einsatz;
einen Kern, umfassend einen zylindrischen Abschnitt und ein konisches Spitzenende; und
einen Strömungsweg;
wobei der Strömungsweg eine Topologie aufweist, die durch den Einsatz und den Kern definiert ist, und wobei das Formwerkzeug eine Expansionskammer und/oder eine Abfolge von verbundenen, vielfachen Expansionskammern umfasst.

11. Verfahren nach Anspruch 10, wobei das Formwerkzeug ein kurzes Formwerkzeug vom Typ Kleiderbügel ist.

12. Verfahren nach einem der Ansprüche 10 oder 11, wobei Gas oder Dampf in das Formwerkzeug eingespritzt wird, während der Teig den Strömungsweg geführt wird.

13. Verfahren nach einem der Ansprüche 11 bis 12, wobei der Teig durch den Strömungsweg mit einer Massenströmungsgeschwindigkeit von mehr als 50 kg/h geleitet wird.

14. Verfahren nach einem der Ansprüche 11 bis 13, wobei das Fleisch- oder Fischanalogon Fasern umfasst, die in einer im Wesentlichen senkrechten Richtung zu dem Strömungsweg des Formwerkzeugs ausgebildet werden.

15. Verwendung eines Formwerkzeugs nach den Ansprüchen 1 bis 9 zum Herstellen eines Fleisch- oder Fischanalogons, umfassend ein pflanzliches Protein, wobei das Formwerkzeug einen konischen Kern mit einer kreisförmigen Symmetrie umfasst.

## Revendications

1. Matrice (10) de fabrication d'un analogue de viande ou de poisson comprenant une protéine végétale, ladite matrice comprenant :
un insert (20) ;
un noyau (30) comprenant une section cylindrique et une extrémité sommitale conique (31) ; et
un trajet d'écoulement (23) ;
dans laquelle le trajet d'écoulement (23) a une topologie définie par l'insert (20) et le noyau (30), et
dans laquelle la matrice (10) comprend une chambre de détente et/ou une succession de chambres de détente multiples reliées,
**caractérisée en ce que**
la matrice (10) est une matrice courte dont le rapport L/πD est inférieur ou égal à 1, où L est la longueur du trajet d'écoulement de matrice et πD est la longueur moyenne du périmètre de sortie.

2. Matrice selon la revendication 1, dans laquelle la matrice a un rapport de l'aire de surface sur le volume allant de 0,1 à 1 mm⁻¹, de préférence de 0,5 à 0,9 mm⁻¹.

3. Matrice selon l'une quelconque des revendications 1 ou 2, dans laquelle au moins deux chambres de détente sont situées le long du trajet d'écoulement.

4. Matrice selon l'une quelconque des revendications 1 à 3, dans laquelle une, deux ou trois chambres de détente sont situées le long de la section cylindrique.

5. Matrice selon l'une quelconque des revendications 1 à 4, dans laquelle le noyau est un noyau conique situé à l'intérieur de l'insert, et dans laquelle il n'y a pas de ponts de liaison entre le noyau conique et l'insert.

6. Matrice selon l'une quelconque des revendications 1 à 5, dans laquelle le noyau conique a un angle au sommet compris entre 45° et 135°, de préférence entre 50° et 75°.

7. Matrice selon l'une quelconque des revendications 1 à 6, dans laquelle la matrice comprend une sortie de matrice, dans laquelle la sortie de matrice est circulaire et formée par l'espace entre le noyau et l'insert.

8. Matrice selon l'une quelconque des revendications 1 à 7, comprenant en outre une ou plusieurs bagues complémentaires situées adjacentes à la matrice.

9. Matrice selon la revendication 8, dans laquelle une bague complémentaire injecte de la matière grasse ou un analogue de matière grasse à travers une fente circulaire.

10. Procédé de fabrication d'un analogue de viande ou de poisson comprenant une protéine végétale, le procédé comprenant :
l'application de chaleur et/ou de pression à une pâte dans une extrudeuse ;
le passage de la pâte à travers une matrice qui fait partie de l'extrudeuse et/ou est reliée à celle-ci, la matrice comprenant :
un insert ;
un noyau comprenant une section cylindrique et une extrémité sommitale conique ; et
un trajet d'écoulement ;
dans lequel le trajet d'écoulement a une topologie définie par l'insert et le noyau, et dans lequel la matrice comprend une chambre de détente et/ou une succession de chambres de détente multiples reliées.

11. Procédé selon la revendication 10, dans lequel la matrice est une matrice courte de type cintre.

12. Procédé selon l'une quelconque des revendications 10 ou 11, dans lequel du gaz ou de la vapeur est injecté dans la matrice lorsque la pâte passe par le trajet d'écoulement.

13. Procédé selon l'une quelconque des revendications 11 à 12, dans lequel la pâte est dirigée à travers le trajet d'écoulement à un débit massique supérieur à 50 kg/h.

14. Procédé selon l'une quelconque des revendications 11 à 13, dans lequel l'analogue de viande ou de poisson comprend des fibres qui sont formées dans une direction sensiblement perpendiculaire au trajet d'écoulement de la matrice.

15. Utilisation d'une matrice telle que décrite dans les revendications 1 à 9 pour fabriquer un analogue de viande ou de poisson comprenant une protéine végétale, dans laquelle ladite matrice comprend un noyau conique avec une symétrie circulaire.
